# EUROPÄISCHE PATENTANMELDUNG

(11) **EP 2 644 957 A1**
(43) Veröffentlichungstag der Anmeldung: **02.10.2013**
(21) Anmeldenummer: 13157922.9
(22) Anmeldetag: 06.03.2013
(51) Int. Cl.: F16L 37/088

(54) **Steckverbindungsanordnung**

(30) Priorität: 26.03.2012 DE 102012005930
(71) Anmelder: VERITAS AG, 63571 Gelnhausen (DE)
(72) Erfinder: Netzer, Heribert, 63457 Hanau (DE); Emmerling, Alexander, 61118 Bad Vilbel (DE)
(74) Vertreter: Witte, Weller & Partner

(57) **Zusammenfassung**

Die vorliegende Erfindung betrifft eine Steckverbindungsanordnung (10) zum lösbaren Verbinden von Fluidleitungen, mit einem Grundkörper (12), der eine Anschlussleitung (14) und eine Einschuböffnung (20) aufweist, wobei der Grundkörper (12) mit einer der Fluidleitungen verbindbar ist, und wobei ein Anschlussstutzen (62), der mit einer zweiten der Fluidleitungen verbindbar ist, auf die Anschlussleitung (14) aufsteckbar ist, um mit der Anschlussleitung (14) eine dichte Verbindung zu bilden, mit einem Fixierelement (22), das in der Einschuböffnung (20) aufgenommen und in der Einschuböffnung (20) in axialer Richtung der Anschlussleitung (14) fixiert ist, um den Anschlussstutzen (62) in einer Einbauposition festzulegen, und mit einem Anschlusselement (34), das an der Anschlussleitung (14) in axialer Richtung beweglich gelagert ist und das Fixierelement (22) in einer Axialposition in radialer Richtung vorspannt.

## Beschreibung

Die vorliegende Erfindung betrifft eine Steckverbindungsanordnung zum lösbaren Verbinden von Fluidleitungen, mit einem Grundkörper, der eine Anschlussleitung und eine Einschuböffnung

aufweist, wobei der Grundkörper mit einer der Fluidleitungen verbindbar ist, und wobei ein Anschlussstutzen, der mit einer zweiten der Fluidleitungen verbindbar ist, auf die Anschlussleitung aufsteckbar ist, um mit der Anschlussleitung eine dichte Verbindung zu bilden, und mit einem Fixierelement, das in der Einschuböffnung aufgenommen und in der Einschuböffnung in axialer Richtung der Anschlussleitung fixiert ist, um den Anschlussstutzen in einer Einbauposition festzulegen.

Aus dem Stand der Technik, insbesondere aus dem Bereich der Verbrennungsmotorentechnik ist es bekannt, Fluidleitungen zum Pumpen von Medien, insbesondere von Kraftstoff, mittels Steckverbindungen miteinander zu verbinden. Dabei ist es von besonderem Interesse, dass die Fluidleitungen eine dichte und mit einem Innendruck belastbare Verbindung bilden. Weiterhin ist es wichtig, dass die Steckverbindungen universell ausgebildet sind, also dass die Steckverbindung an mehrere Leitungen anschließbar ist, um die Anzahl von unterschiedlichen Bauteilen zu reduzieren.

Bei den Steckverbindungen im Automobilbereich ist es besonders wichtig, dass die Steckverbindungen eine zuverlässige und langlebige Verbindung bilden und gleichzeitig im Reparaturfall zerstörungsfrei gelöst werden können. Ferner ist es von Interesse, dass die Steckverbindungen einfach und schnell montiert werden können, um so die Herstellungskosten der gesamten montierten Einheit zu reduzieren. Üblicherweise werden derartige Steckverbindungen mittels zwei aufeinandersteckbaren Rohrabschnitten realisiert, die mittels einer Schraub- oder Klammerverbindung aneinander fixiert werden. Dabei werden die Rohrabschnitte zunächst aufeinandergesteckt und in eine endgültige Einbauposition gebracht. Nachdem die endgültige Einbauposition erreicht ist, wird ein Klammer- oder Schraubverbindungselement an den aufeinandergesteckten Rohrabschnitten angebracht, um die Rohrabschnitte fest miteinander zu verbinden.

Nachteilig dabei ist es, dass derartige Steckverbindungen im Allgemeinen technisch aufwändig sind, mit großem Montageaufwand montiert werden müssen und die korrekte Montage mit hohem Aufwand geprüft werden muss.

Es ist daher die Aufgabe der vorliegenden Erfindung, eine Steckverbindungsanordnung zum lösbaren Verbinden von Fluidleitungen bereitzustellen, die eine zuverlässige Verbindung der Fluidleitungen bildet und gleichzeitig mit geringem Montageaufwand montiert und mit geringem Aufwand geprüft werden kann.

Diese Aufgabe wird bei der eingangs genannten Steckverbindungsanordnung gemäß einem ersten Aspekt der vorliegenden Erfindung gelöst durch ein Anschlusselement, das an der Anschlussleitung in axialer Richtung beweglich gelagert ist und das Fixierelement in einer Axialposition in radialer Richtung vorspannt.

Die oben genannte Aufgabe wird bei der eingangs genannten Steckverbindungsanordnung gemäß einem zweiten Aspekt der vorliegenden Erfindung dadurch gelöst, dass der Grundkörper einen Aufnahmeabschnitt aufweist, der zwischen einem Axialanschlag des Grundkörpers und der Einschuböffnung gebildet ist, wobei ein Anschlusselement mittels des Anschlussstutzens in den Aufnahmeabschnitt einführbar ist, und das Anschlusselement in dem Aufnahmeabschnitt derart zusammengedrückt wird, dass der Anschlussstutzen koaxial zu der Anschlussleitung fixiert wird.

Die oben genannte Aufgabe wird bei der eingangs genannten Steckverbindungsanordnung gemäß einem dritten Aspekt der vorliegenden Erfindung gelöst durch ein Anschlusselement, das an der Anschlussleitung in axialer Richtung beweglich gelagert ist, wobei das Anschlusselement mittels des Anschlussstutzens in einer Einbauposition bewegbar ist, wobei das Anschlusselement einen in axialer Richtung hervorstehenden Fortsatz aufweist, der in der Einbauposition in eine Öffnung des Grundkörpers hineinragt, um die Position des Anschlusselements anzuzeigen.

Dadurch, dass gemäß dem ersten Aspekt der vorliegenden Erfindung ein Anschlusselement vorgesehen ist, das an der Anschlussleitung in axialer Richtung beweglich gelagert ist und das Fixierelement in einer Axialposition in radialer Richtung vorspannt, kann der Anschlussstutzen durch einfaches Aufschieben auf die Anschlussleitung mit der Anschlussleitung verbunden werden. Da das Anschlusselement das Fixierelement bereits in radialer Richtung vorspannt, kann der Anschlussstutzen ferner auf die Anschlussleitung aufgeschoben werden, ohne dass die radiale Vorspannkraft beim Aufschieben aufgewendet werden muss. Dadurch kann der Montageaufwand reduziert werden, da der nachträgliche Montageschritt des Fixierelements entfällt und gleichzeitig die Kraft zum Aufstecken des Anschlussstutzens reduziert ist.

Dadurch, dass gemäß dem zweiten Aspekt der vorliegenden Erfindung das Anschlusselement in dem Aufnahmeabschnitt zusammengedrückt wird und den Anschlussstutzen koaxial zu der Anschlussleitung fixiert, kann durch einfaches Aufstecken des Anschlussstutzens auf die Anschlussleitung der Anschlussstutzen zentriert und fixiert werden, wodurch der Montageaufwand reduziert ist und gleichzeitig der Anschlussstutzen in einer optimalen Position an der Anschlussleitung montiert werden kann.

Dadurch, dass gemäß dem dritten Aspekt der vorliegenden Erfindung ein Anschlusselement vorgesehen ist, das in axialer Richtung an der Anschlussleitung beweglich gelagert ist, und das mittels des Anschlussstutzens in die Einbauposition bewegbar ist und gleichzeitig einen hervorstehenden Fortsatz aufweist, der in der Einbauposition in eine Öffnung des Grundkörpers ragt, kann die Position des Anschlusselementes angezeigt werden. Dabei zeigt der hervorstehende Fortsatz gleichzeitig an, ob ein Anschlusselement montiert ist und ob der Anschlussstutzen in die Endmontageposition bewegt wurde. Dadurch kann mit einfachen technischen Mitteln geprüft werden, ob der Anschlussstutzen in die Endmontageposition bewegt wurde, wodurch die Montage im Allgemeinen zuverlässiger wird.

Die Aufgabe der vorliegenden Erfindung wird somit vollständig gelöst.

In einer besonderen Ausführungsform des ersten Aspekts der vorliegenden Erfindung ist das Anschlusselement mittels des Anschlussstutzens in eine zweite Axialposition bewegbar, so dass das Fixierelement an dem Anschlussstutzen zur Anlage kommt und den Anschlussstutzen in axialer Richtung festlegt.

Dadurch kann der Anschlussstutzen durch einfaches Aufstecken auf die Anschlussleitung fixiert werden, wodurch der nachträgliche Montageschritt des Fixierelements entfällt und der Montageaufwand des Anschlussstutzens reduziert ist.

Dabei ist es besonders bevorzugt, wenn der Grundkörper einen Axialanschlag für das Anschlusselement aufweist, und wobei das Anschlusselement in der zweiten Axialposition zwischen dem Axialanschlag und der Einschuböffnung angeordnet ist.

Dadurch kann eine Einbauposition des Anschlussstutzens definiert werden und das Fixierelement zuverlässig an dem Anschlussstutzen zur Anlage gebracht werden, so dass eine zuverlässige und feste Einbauposition erreicht wird.

Bei dem zweiten Aspekt der vorliegenden Erfindung ist es besonders bevorzugt, wenn das Anschlusselement einen Zentrierabschnitt mit einem Außenradius aufweist, der größer ist als ein Innenradius des Aufnahmeabschnitts.

Dadurch ist gewährleistet, dass das Anschlusselement nicht unbeabsichtigt oder fehlerhaft in die Einbauposition bewegt wird, da durch den Anschlussstutzen eine bestimmte Kraft in axialer Richtung ausgeübt werden muss, um das Anschlusselement in den Aufnahmeabschnitt zu bewegen.

Es ist dabei besonders bevorzugt, wenn der Aufnahmeabschnitt koaxial zu der Anschlussleitung ausgebildet ist.

Dadurch kann durch einfaches Einführen des Anschlusselementes der Anschlussstutzen koaxial zu der Anschlussleitung fixiert und zentriert werden.

Bei dem dritten Aspekt der vorliegenden Erfindung ist es besonders bevorzugt, wenn das Anschlusselement in der Einbauposition zwischen dem Axialanschlag des Grundkörpers und der Einschuböffnung angeordnet ist.

Dadurch ist eine Einbauposition des Anschlusselementes relativ zu dem Grundkörper definiert, wodurch die Einbauposition des Anschlusselementes und des Anschlussstutzens zuverlässig angezeigt werden kann.

Es ist im Allgemeinen bevorzugt, wenn das Anschlusselement ein Anschlagelement aufweist, das mit dem Grundkörper einen zweiten Axialanschlag für das Anschlusselement bildet und wobei zwischen dem ersten Axialanschlag und dem zweiten Axialanschlag ein Leerweg gebildet ist.

Dadurch kann das Anschlusselement verliersicher an den Grundkörper vormontiert werden.

Es ist dabei besonders bevorzugt, wenn das Anschlusselement zwischen dem ersten und dem zweiten Axialanschlag an der Anschlussleitung in axialer Richtung beweglich gelagert ist.

Dadurch kann das Anschlusselement zwischen den beiden Axialpositionen bei der Montage und bei der Demontage beliebig hin- und herbewegt werden, wodurch im Allgemeinen die Montage und die zerstörungsfreie Demontage vereinfacht ist.

Es ist weiterhin bevorzugt, wenn an dem ersten Axialanschlag eine Einbauposition und an dem zweiten Axialanschlag eine Vormontageposition gebildet ist.

Durch diese Definition der Einbauposition und der Vormontageposition wird das Montieren des Fixierelements und des Anschlusselements im Allgemeinen einfacher und zuverlässiger, da das Anschlusselement lediglich zwischen den beiden relevanten Positionen hin- und herbewegt werden kann.

Es ist besonders bevorzugt, wenn das Anschlagelement als ein in axialer Richtung hervorstehendes Rastelement ausgebildet ist, das in eine Öffnung des Grundkörpers hineinragt.

Dadurch kann mit einfachen Mitteln ein zweiter Axialanschlag bereitgestellt werden, der durch einfaches Aufstecken des Anschlusselementes auf den Grundkörper montiert werden kann.

Es ist allgemein bevorzugt, wenn das Anschlusselement wenigstens ein Mitnehmerelement aufweist, das das Anschlusselement mit dem Anschlussstutzen in axialer Richtung lösbar verbindet.

Dadurch kann die Demontage des Anschlussstutzens erleichtert werden, da beim Abziehen bzw. Lösen des Anschlussstutzens das Mitnehmerelement das Anschlusselement aus der Einbauposition in die Vormontageposition bewegt.

Es ist dabei besonders bevorzugt, wenn der Anschlussstutzen von dem Anschlusselement durch eine vordefinierte Zugkraft lösbar ist.

Dadurch kann bei Erreichen der Vormontageposition der Anschlussstutzen von dem Anschlusselement durch Erhöhen der Zugkraft einfach und zuverlässig gelöst werden.

Es ist dabei besonders bevorzugt, wenn das Mitnehmerelement als Rastelement ausgebildet ist.

Dadurch kann mit einfachen Mitteln eine lösbare Verbindung realisiert werden, die durch eine vordefinierte Zugkraft lösbar ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivisch schematische Ansicht einer Steckverbindungsanordnung mit einem Anschlusselement;
- Fig. 2: eine perspektivische Detailansicht des Anschlusselements;
- Fig. 3a, b: eine schematische Schnittansicht der Steckverbindungsanordnung aus Fig. 1 zur Erläuterung der Funktionsweise des Anschlusselementes;
- Fig. 4a, b: schematische Schnittansichten der Steckverbindungsanordnung aus Fig. 1 zur Erläuterung der Zentrierungsfunktion des Anschlusselementes;
- Fig. 5a, b: eine schematische Ansicht eines Abschnitts des Grundkörpers der Steckverbindungsanordnung zur Erläuterung einer Positionsanzeige und eines Anschlagelementes;
- Fig. 6a, b: eine schematische Schnittansicht der Steckverbindungsanordnung aus Fig. 1 zur Erläuterung eines Mitnehmerelementes;
- Fig. 7: eine perspektivische Explosionsdarstellung der Steckverbindungsanordnung aus Fig. 1;
- Fig. 8: eine perspektivische Darstellung der Steckverbindungsanordnung mit aufgestecktem Anschlussstutzen; und
- Fig. 9: eine schematisch perspektivische Rückseitenansicht der Steckverbindungsanordnung aus Fig. 1.

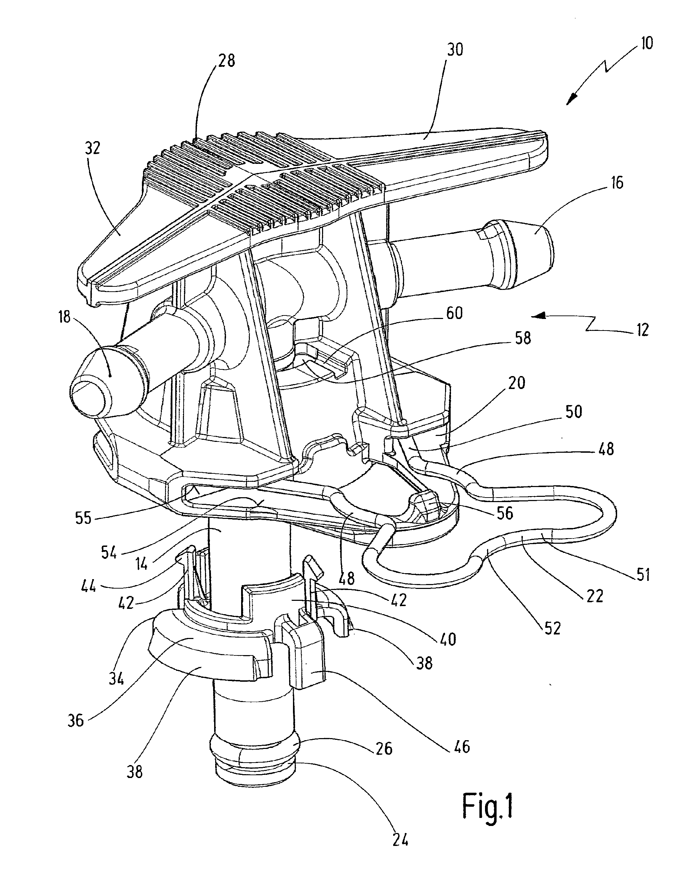

In Fig. 1 ist eine Steckverbindungsanordnung schematisch dargestellt und allgemein mit 10 bezeichnet.

Die Steckverbindungsanordnung 10 weist einen Grundkörper 12 mit einer Anschlussleitung 14 und zwei Anschlussstutzen 16, 18 auf. In dem Grundkörper 12 ist eine radiale Einschuböffnung 20 ausgebildet, in der ein Fixierelement 22 aufgenommen ist. Die Anschlussleitung 14 weist an einem distalen Ende eine umfängliche Nut 24 auf, in der ein O-Ring 26 aufgenommen ist. An einer der Anschlussleitung 14 gegenüberliegende Seite weist der Grundkörper 12 einen Montageabschnitt 28 auf, der als horizontale Fläche senkrecht zu einer Längsachse der Anschlussleitung 14 gebildet ist. Der Montageabschnitt 28 weist an seiner Oberfläche ein Rippenprofil auf. Von dem Montageabschnitt 28 aus erstrecken sich zwei Flügel 30, 32, die in derselben Ebene wie der Montageabschnitt 28 gebildet sind. Die Flügel 30, 32 sind oberhalb der Anschlussstutzen 16, 18 gebildet und decken die Anschlussstutzen 16, 18 in einer axialen Blickrichtung der Anschlussleitung 14 ab.

An der Anschlussleitung 14 ist ein Anschlusselement 34 angeordnet. Das Anschlusselement 34 ist an der Anschlussleitung 14 in axialer Richtung beweglich gelagert. Das Anschlusselement 34 ist im Wesentlichen ringförmig ausgebildet und weist zwei Anlageabschnitte 36 auf, die zwei umfängliche Abschnitte des Anschlusselementes 34 bilden. An den Anlageabschnitten ist jeweils ein Vorsprung 38 ausgebildet, der in radialer Richtung gegenüber dem jeweiligen Anlageabschnitt 36 hervorsteht.

An dem Anschlusselement 34 sind zwei Fortsätze 40 ausgebildet, die sich in axialer Richtung erstrecken. Die Fortsätze 40 sind als gebogene Elemente koaxial zu der Anschlussleitung 14 ausgebildet. Das Anschlusselement 34 weist ferner zwei Anschlagelemente 42 auf, die sich in axialer Richtung erstrecken. Die Anschlagelemente 42 stehen gegenüber dem Anlageabschnitt 36 in axialer Richtung hervor. Die Anschlagelemente 42 weisen jeweils eine Raste 44 auf, die sich gegenüber dem Anschlagelement 42 in radialer Richtung erstrecken.

Das Anschlusselement 34 weist ferner zwei Mitnehmer 46 auf, die sich in axialer Richtung erstrecken. Die Mitnehmer 46 erstrecken sich in einer Richtung, die den Fortsätzen 40 und den Anschlagelementen 42 entgegengesetzt ist.

Das Fixierelement 22 ist als elastische Klammer ausgebildet, die an einer Seite offen ausgebildet ist. Die Klammer ist vorzugsweise aus einem elastischen Material wie z.B. Metall oder Kunststoff gebildet. Das Fixierelement 22 weist zwei Fixierabschnitte 48 auf, die an zwei gegenüberliegenden Seiten ausgebildet sind und wenigstens abschnittsweise eine Kreisform aufweisen. Das Fixierelement 22 weist ferner zwei Einführabschnitte 50 auf, die sich an die Fixierabschnitte 48 anschließen. Die Einführabschnitte sind im Wesentlichen gerade ausgebildet und bilden zusammen an der offenen Seite eine Trichterform. Das Fixierelement 22 weist ferner einen Griffabschnitt 51 auf, der an einer den Einführabschnitten 50 bzw. der offenen Seite gegenüberliegenden Seite des Fixierelements 22 ausgebildet ist. An dem Fixierelement 22 im Bereich des Griffabschnitts 51 ist ferner ein Anschlagabschnitt 52 ausgebildet, der mit einem Element des Grundkörpers 12 einen radialen Anschlag bildet.

Die radiale Einschuböffnung 20 ist gebildet zwischen einer ersten Führungsfläche 54 und einer zweiten Führungsfläche 55, die senkrecht zu einer Längsachse der Anschlussleitung 14 ausgebildet sind und sich einander gegenüberliegen. Zwischen den Führungsflächen 54, 55 ist das Fixierelement 22 aufgenommen und in axialer Richtung fixiert. Die Führungsfläche 54 steht in radialer Richtung gegenüber der Führungsfläche 55 hervor, um das Einführen des Fixierelements 22 zu erleichtern. An einem radialen Ende der Führungsfläche 54 ist ein Anschlagelement 56 angeordnet, an dem der Anschlagabschnitt 52 des Fixierelements beim Herausziehen anschlägt. Dadurch ist eine Verliersicherung für das Fixierelement 22 gebildet, wodurch ein vollständiges Lösen des Fixierelements beim Herausziehen aus der Einschuböffnung 20 verhindert werden kann.

In dem Grundkörper 12 ist zwischen der radialen Einschuböffnung 20 und dem Montageabschnitt 28 eine Öffnung 58 ausgebildet, die sich in axialer Richtung der Anschlussleitung 14 erstreckt. Ferner ist im Bereich der Öffnung 58 ein Anschlag 60 gebildet. Die Öffnung 58 ist bogenförmig und koaxial zu der Anschlussleitung 14 ausgebildet. Die Öffnung 58 ist so ausgebildet, dass der Fortsatz 40 durch die Öffnung hindurchragen kann, um eine Einbauposition des Anschlusselementes 34 anzuzeigen, wie es im Folgenden näher erläutert ist. Durch die Öffnung 58 kann ferner das Anschlagelement 42 hindurchragen, so dass die Raste 44 hinter den Anschlag 60 greift und somit einen Axialanschlag für das Anschlusselement 34 bildet.

Die Steckverbindungsanordnung 10 dient im Allgemeinen dazu Fluidleitungen miteinander zu verbinden. Dazu werden zwei Fluidleitungen mit den Anschlussstutzen 16, 18 verbunden und eine weitere mit einem in Fig. 1 nicht dargestellten Anschlussstutzen verbundene Fluidleitung wird mit dem Grundkörper 12 verbunden, indem der Anschlussstutzen auf die Anschlussleitung 14 aufgesteckt wird und mittels des Fixierelements 22 in einer Einbauposition festgelegt wird. Mit anderen Worten wird die Anschlussleitung 14 in den hier nicht dargestellten Anschlussstutzen eingeführt und mittels des Fixierelementes 22 festgelegt.

Bevor der Anschlussstutzen auf die Anschlussleitung 14 aufgesteckt wird, wird das Anschlusselement 34 in einer Vormontageposition im Bereich der radialen Einschuböffnung 20 angeordnet und die Fixierabschnitte 48 des Fixierelementes 22 an dem Anlageabschnitte 36 zur Anlage gebracht und radial vorgespannt. Das so vormontierte Anschlusselement 34 wird dann beim Aufstecken des Anschlussstutzens in eine Endmontageposition bewegt und die vorgespannten Fixierabschnitte 48 kommen an dem Anschlussstutzen zur Anlage, um diesen in der Endmontageposition zu fixieren.

Die Anschlussstutzen 16, 18 sind abgewinkelt zueinander angeordnet. Dies ist durch eine besondere Einbauposition der Steckverbindungsanordnung 10 bedingt und ermöglicht eine definierte Schlauchbiegung von Schläuchen, die an den Anschlussstutzen 16, 18 angeschlossen werden. Dadurch entfällt vorteilhafterweise beim Montieren der Steckverbindungsanordnung 10 der Arbeitsschritt, in dem die Anschlussschläuche gebogen werden müssen, um an den Anschlussstutzen 16, 18 angeschlossen zu werden.

Das Fixierelement 22 ist in der radialen Einschuböffnung 20 in axialer Richtung fixiert und in radialer Richtung beweglich gelagert. Dadurch kann das Fixierelement den Anschlussstutzen in axialer Richtung fixieren und in radialer Richtung ein- und ausgeführt werden.

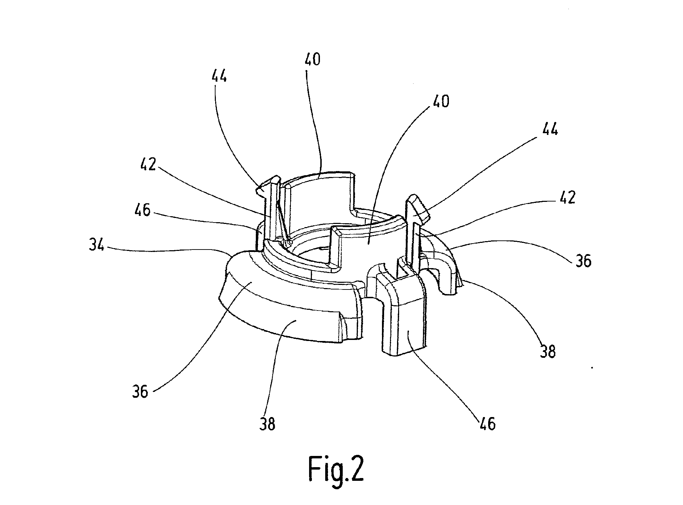

In Fig. 2 ist das Anschlusselement 34 detailliert perspektivisch dargestellt. Das Anschlusselement 34 ist ringförmig ausgebildet und weist die Anlageabschnitte 36 auf, an denen in der Vormontageposition die Fixierabschnitte 48 zur Anlage gebracht werden. Die Anlageabschnitte 36 sind an jeweils einem bogenförmig ausgebildeten und in einer axialen Richtung hervorstehenden Element ausgebildet. An den Anlageabschnitten 36 ist jeweils ein Vorsprung 38 ausgebildet, der sich jeweils gegenüber dem Anlageabschnitt 36 in radialer Richtung erstreckt, wobei durch den jeweiligen Vorsprung eine im Wesentlichen abschnittsweise kegelförmige Fläche gebildet ist. Die Vorsprünge 38 dienen dazu das Anschlusselement 34 in einer Einbauposition relativ zu den Grundkörper 12 zu fixieren und ein axiales Ende des anzuschließenden Anschlussstutzens zu fixieren und zu zentrieren, wie es im Weiteren näher erläutert ist.

Die Fortsätze 40 und die Anschlagelemente 42 erstrecken sich in axialer Richtung. In einer Einbauposition des Anschlusselementes 34 ragen die Fortsätze 40 in die Öffnung 58 und können somit die Einbauposition des Anschlusselementes 34 anzeigen. Ferner ragen auch die Anschlagelemente 42 durch die Öffnung 58, deren Raste 44 mit dem Anschlag 60 ein Axialanschlag für das Anschlusselement 34 bilden. Ferner sind an dem Anschlusselement 34 die Mitnehmer 46 ausgebildet, die sich in einer den Fortsätze 40 und den Anschlagelementen 42 entgegengesetzten axialen Richtung erstrecken. Die Mitnehmer 46 weisen jeweils eine hier nicht dargestellte nach innen gerichtete Raste auf, um mit einer Nut des Anschlussstutzens eine lösbare Verbindung zu bilden, wie es im Weiteren näher erläutert ist.

Das Anschlusselement 34 ist separat von dem Grundkörper 12, separat von dem Anschlussstutzen und separat von dem Fixierelement 22 ausgebildet.

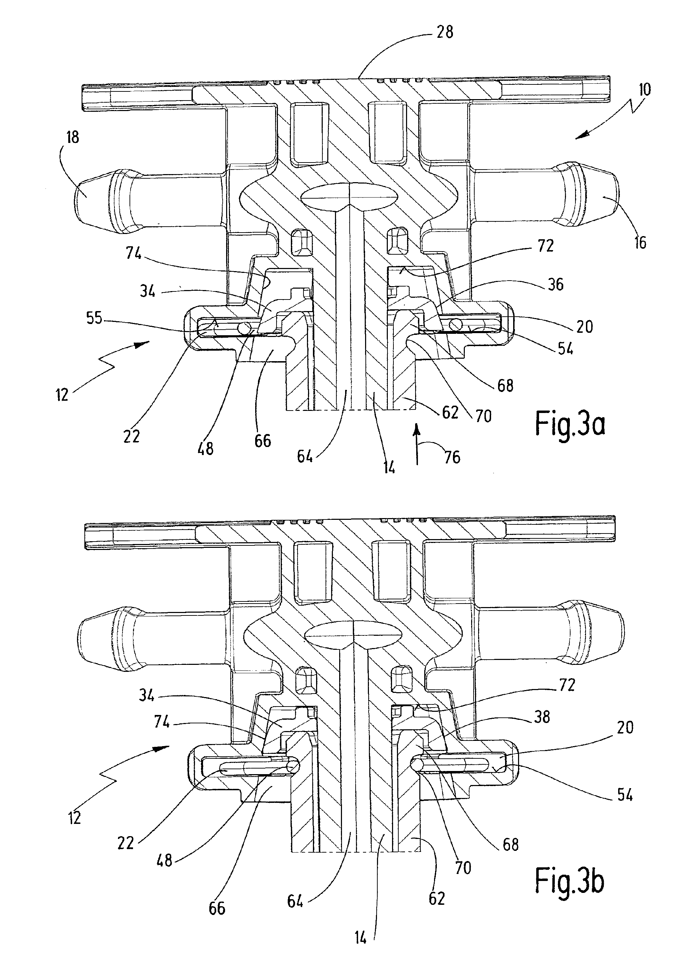

In Fig. 3a und b sind schematische Schnittansichten der Steckverbindungsanordnung 10 zur Erläuterung der Funktionsweise der Steckverbindungsanordnung 10 dargestellt. Gleiche Elemente sind mit gleichen Bezugsziffern bezeichnet, wobei hier lediglich die Besonderheiten erläutert sind.

In Fig. 3a ist koaxial zu der Anschlussleitung 14 ein Anschlussstutzen 62 auf die Anschlussleitung 14 aufgeschoben. Die Anschlussleitung 14 weist eine innere Fluidleitung 64 auf, die mit inneren Leitungen der Anschlussstutzen 16, 18 verbunden ist und ein T-Stück bildet. In dem Grundkörper 12 ist eine Öffnung 66 ausgebildet, die die Anschlussleitung 14 umgibt. Die Öffnung 66 ist in der Führungsfläche 54 gebildet. Das Anschlusselement 34 ist in Fig. 3a in der Vormontageposition dargestellt, so dass das Fixierelement 22 bzw. die Fixierabschnitte 48 an den jeweiligen Anlageabschnitten 36 des Anschlusselements 34 zur Anlage kommen. In dieser Position weitet das Anschlusselement 34 das Fixierelement 22 in radialer Richtung auf und spannt die Fixierabschnitte 48 in radialer Richtung vor. Da das Fixierelement 22 zwischen den Führungsflächen 54, 55 in axialer Richtung festgelegt ist, können sich die Fixierabschnitte 48 lediglich in radialer Richtung bewegen.

Der Anschlussstutzen 62 ist in die Öffnung 66 eingeführt, so dass ein axiales Ende des Anschlussstutzens 62 an dem Anschlusselement 34 zur Anlage kommt. Der Anschlussstutzen 62 weist einen Endabschnitt 68 auf, der an dem axialen Ende des Anschlussstutzens 62 ausgebildet ist. Der Anschlussstutzen 62 weist ferner eine Nut 70 auf, die wenigstens abschnittsweise umfänglich an dem Anschlussstutzen 62 ausgebildet ist. Die Nut 70 schließt sich direkt an den Endabschnitt 68 in axialer Richtung des Anschlussstutzens 62 an. In der in Fig. 3a dargestellten Vormontageposition ist der Endabschnitt 68 von den Anlageabschnitten 36 umfänglich umgeben.

An dem Grundkörper 12 ist ferner ein Axialanschlag 72 ausgebildet. Der Axialanschlag 72 ist als Fläche senkrecht zu einer Längsachse der Anschlussleitung 14 ausgebildet. Ferner ist in dem Grundkörper 12 ein Aufnahmeabschnitt 74 gebildet, der zylinder- oder kegelförmig ausgebildet sein kann und in den das Anschlusselement 34 in der in Fig. 3a dargestellten Position teilweise hineinragt.

Der Anschlussstutzen 62 wird grundsätzlich in einer Aufschubrichtung auf die Anschlussleitung 14 aufgeschoben, wie es durch einen Pfeil 76 angedeutet ist.

In Fig. 3b ist eine Endposition bzw. eine Einbauposition des Anschlusselements 34 und des Anschlussstutzens 62 dargestellt. Gleiche Elemente sind mit gleichen Bezugsziffern bezeichnet, wobei hier lediglich die Besonderheiten erläutert sind.

Wenn ausgehend von der in Fig. 3a dargestellten Vormontageposition der Anschlussstutzen 62 in Richtung des Pfeils 76 weiter eingeschoben wird, geben die Anlageabschnitte 36 die Fixierabschnitte 48 frei, so dass diese sich durch die radiale Vorspannung nach innen bewegen und in der Nut 70 des Anschlussstutzens 62 zur Anlage kommen. Da das Fixierelement 22 zwischen den Führungsflächen 54, 55 in axialer Richtung fixiert ist, ist auch der Anschlussstutzen 62 in dieser Einbauposition in axialer Richtung fixiert. Das Anschlusselement 34 ist in axialer Richtung an dem Axialanschlag 72 zur Anlage gebracht, so dass eine definierte Axialposition erreicht wird. Ferner kommen die Vorsprünge 38 an dem Aufnahmeabschnitt 74 zur Anlage, so dass das Anschlusselement 34 koaxial zentriert wird.

Durch den O-Ring 26 bildet die Anschlussleitung 14 und der Anschlussstutzen 62 in dieser Einbauposition eine dichte Verbindung, so dass die Fluidleitungen dicht miteinander verbunden sind.

Dadurch, dass das Anschlusselement 34 in der Vormontageposition, die in Fig. 3a dargestellt ist, bereits das Fixierelement 22 in radialer Richtung vorspannt, und in Richtung des Pfeils 76 mittels des Anschlussstutzens 62 lediglich eine geringe Kraft ausgeübt werden muss, um das Anschlusselement 34 in die Endposition bzw. die Einbauposition zu bewegen, kann der Montageaufwand für das Aufstecken und Fixieren des Anschlussstutzens 62 deutlich reduziert werden. Das Aufstecken des Anschlussstutzens 62 bzw. das Einführen der Anschlussleitung 14 erfolgt durch eine Kraft, die auf den Montageabschnitt 28 ausgeübt wird.

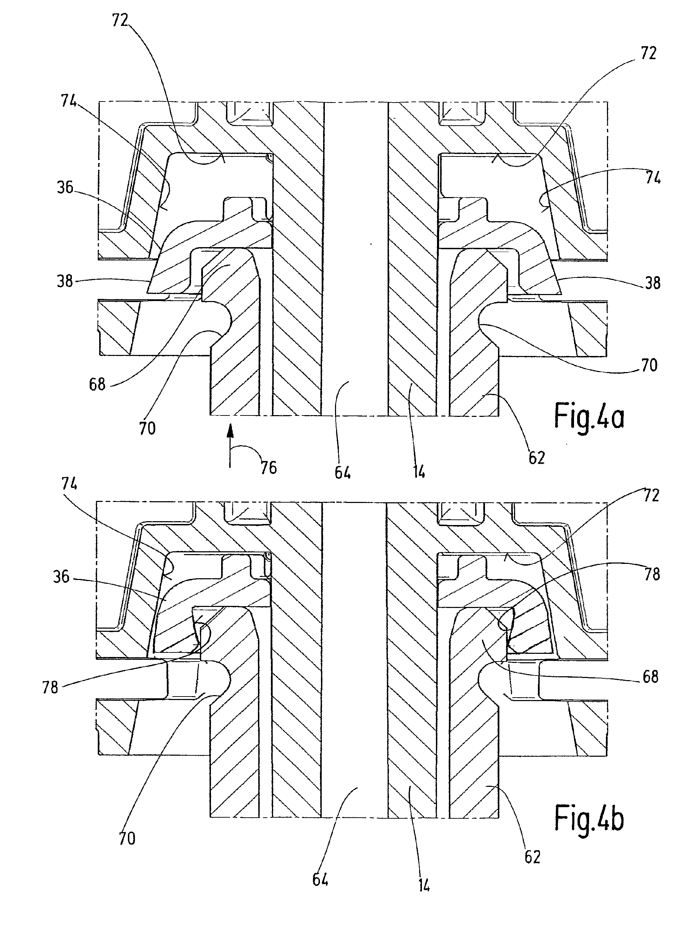

In Fig. 4a, b ist eine schematische Schnittansicht der Steckverbindungsanordnung 10 zur Erläuterung der Zentrierung des Anschlussstutzens 62 mittels des Anschlusselements 34 dargestellt. Gleiche Elemente sind mit gleichen Bezugsziffern bezeichnet, wobei hier lediglich die Besonderheiten erläutert sind.

In Fig. 4a ist die Vormontageposition des Anschlusselements 34 dargestellt, in der der Anschlussstutzen 62 bereits an dem Anschlusselement 34 zur Anlage gebracht ist. Die Vorsprünge 38 weisen einen größeren äußeren Durchmesser auf als der Innendurchmesser des Aufnahmeabschnitts 74. Sofern der Anschlussstutzen 62 in Richtung des Pfeils 76 in den Grundkörper 12 hineingeschoben wird, kommt das Anschlusselement 34 an dem Axialanschlag 72 zur Anlage, wobei gleichzeitig die Vorsprünge 38 in radialer Richtung nach innen gedrückt werden.

In Fig. 4b ist die Einbauposition des Anschlusselements 34 und des Anschlussstutzens 62 dargestellt. In dieser Position sind die Vorsprünge 38 radial nach innen gedrückt, wodurch eine innere Umfangsfläche 78 des Anschlusselements 34 an dem Endabschnitt 68 zur Anlage gebracht wird und den Anschlussstutzen 62 fixiert und koaxial zu der Anschlussleitung 14 zentriert. Dadurch kann mittels des Anschlusselements 34 eine besonders präzise Einbauposition des Anschlussstutzens erzielt werden.

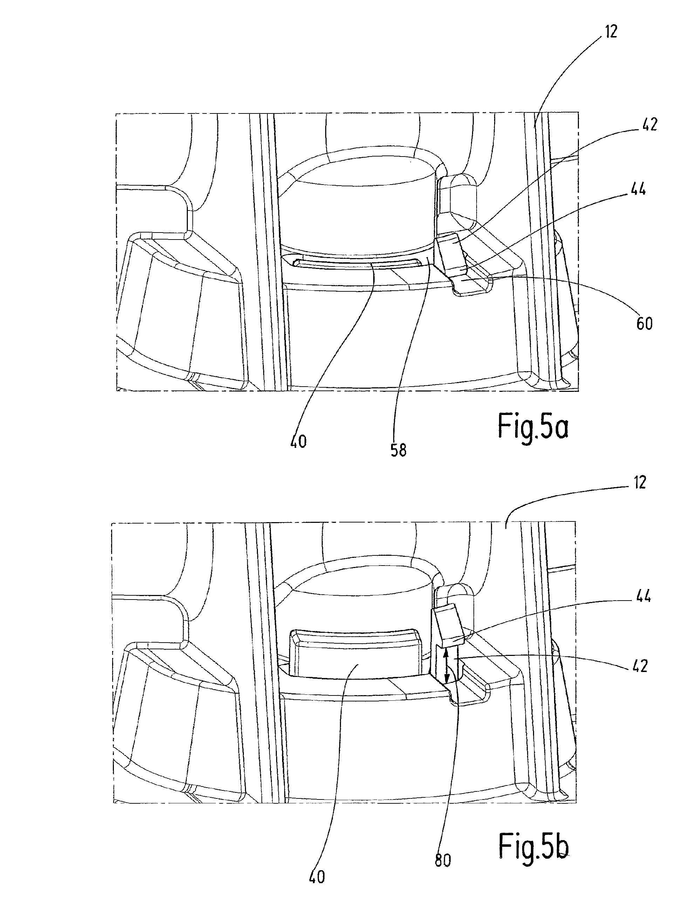

In den Figuren 5a und b sind Detailansichten des Grundkörpers 12 zur Erläuterung der Funktionsweise des Fortsatzes 40 und des Anschlagelements 42 schematisch dargestellt.

In Fig. 5a ist das Anschlusselement 34 in der in Fig. 3a und 4a gezeigten Vormontageposition dargestellt. In dieser Vormontageposition ragt der Fortsatz 40 nicht durch die Öffnung 58 hindurch. Das Anschlagelement 42 ragt teilweise durch die Öffnung 58 hindurch, und zwar soweit, dass die Raste 44 gerade hinter den Anschlag 60 greifen kann und somit einen Axialanschlag mit dem Grundkörper 12 bildet. Die Raste 44 dient dazu, dass das Anschlusselement 34 nicht weiter von dem Grundkörper 12 wegbewegt werden kann, sofern es die Vormontageposition erreicht hat. Mit anderen Worten ist das Anschlusselement 34, sofern das Fixierelement 22 an den Anlageabschnitten 36 fixiert in dieser Vormontageposition festgelegt.

Sofern der Anschlussstutzen 62 in Richtung des Pfeils 76 aus Fig. 3a und 4a bewegt wird, wird das Anschlusselement 34 in die Endposition bewegt und der Fortsatz 40 durch die Öffnung 58 hindurch geschoben, wie es in Fig. 5b gezeigt ist. Ebenso wird das Anschlagelement 42 durch die Öffnung 58 hindurch nach oben bewegt. In der in Fig. 5b gezeigten Position ist das Anschlusselement 34 an dem Axialanschlag 72 zur Anlage gebracht, so dass der Fortsatz 40 und das Anschlagelement 42 nicht weiter durch die Öffnung 58 hindurch bewegt werden können. In dieser zweiten Axialposition des Anschlusselements 34 ist die Endmontageposition erreicht. Zwischen der Raste 44 und dem Axialanschlag 72 ein Leerweg 80 gebildet, der in Fig. 5 schematisch dargestellt ist.

Durch den Fortsatz 40 wird somit die Endmontageposition des Anschlusselements 34 mit einfachen Mitteln angezeigt, so dass die korrekte Montage des Anschlusselements 34 und des Anschlussstutzens 62 von außen kontrolliert werden kann. Durch das Anschlagelement 42 und den Axialanschlag 72 und den zwischen diesen Anschlägen gebildete Leerweg 80, ist die Axialbewegung des Anschlusselements 34 beschränkt, so dass sich das Anschlusselement 34 lediglich zwischen der Vormontageposition und der Endmontageposition bewegen kann.

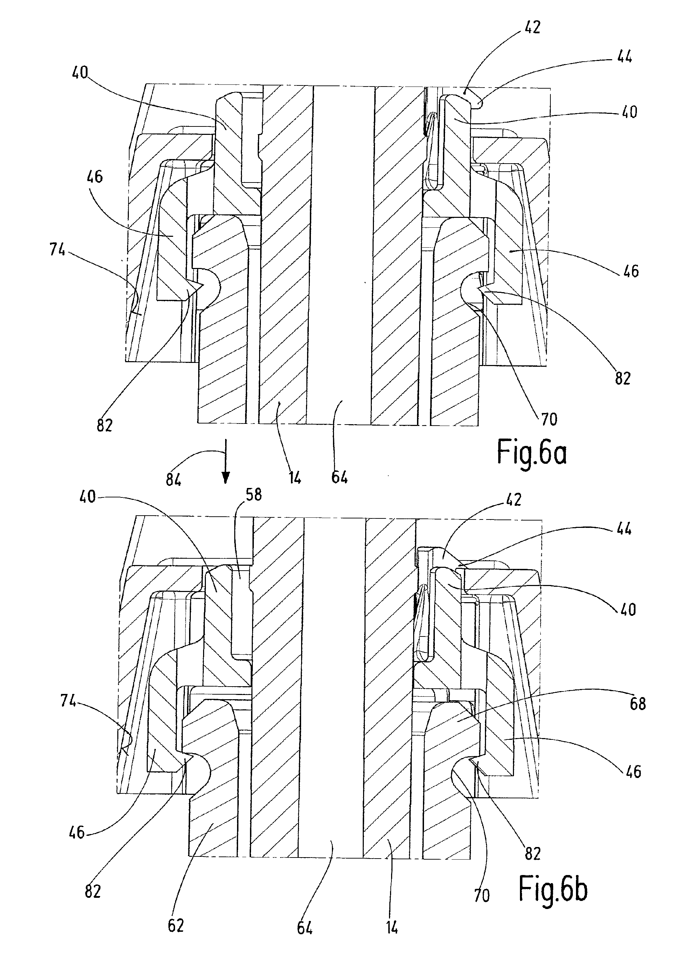

In Fig. 6a und b sind schematische Schnittansichten der Steckverbindungsanordnung 10 zur Erläuterung der Funktionsweise des Mitnehmers 46 dargestellt. Gleiche Elemente sind mit gleichen Bezugsziffern bezeichnet, wobei hier lediglich die Besonderheiten erläutert sind.

Die Mitnehmer 46 weisen jeweils ein Rastelement 82 auf, die sich radial nach innen erstrecken. In der in Fig. 6a dargestellten Einbauposition des Anschlusselements 34 sind die Rastelemente 82 in den Nuten 70 des Anschlussstutzens 62 angeordnet. Sofern der Anschlussstutzen 62 demontiert werden soll, wird zunächst das Fixierelement 22 gelöst und daraufhin der Anschlussstutzen 62 in Richtung eines Pfeils 84 von der Anschlussleitung 14 gezogen. Wenn die Nuten 70 an den Rastelementen 82 anschlagen, wird das Anschlusselement 34 aus der Einbauposition herausbewegt in Richtung des Pfeils 84 und in die Vormontageposition zurückbewegt, wie es in Fig. 6b gezeigt ist. In dieser Position ragt der Fortsatz 40 nicht durch die Öffnung 58 hindurch, so dass die Vormontageposition von außen leicht ersichtlich ist. Ferner ist das Anschlagelement 42 in dieser Position an den Anschlag 60 zur Anlage gebracht. Durch diesen Mitnehmer 46 kann beim Demontieren des Anschlussstutzens 62 das Anschlusselement 34 leicht in die Vormontageposition zurückbewegt werden und dort wiederum von dem Fixierelement 22 fixiert werden, um wieder erneut bei Montage des Anschlussstutzens 62 in die Einbauposition bewegt zu werden.

Um den Anschlussstutzen 62 vollständig von der Anschlussleitung 14 zu lösen, muss in der in Fig. 6b dargestellten Position die Zugkraft in Richtung des Pfeils 84 erhöht werden, so dass die Mitnehmer 46 nach radial außen geschwenkt werden und die Rastelemente 82 den Anschlussstutzen 62 freigeben. Somit kann durch eine vordefinierte Zugkraft der Anschlussstutzen 62 von der Anschlussleitung 14 gelöst werden.

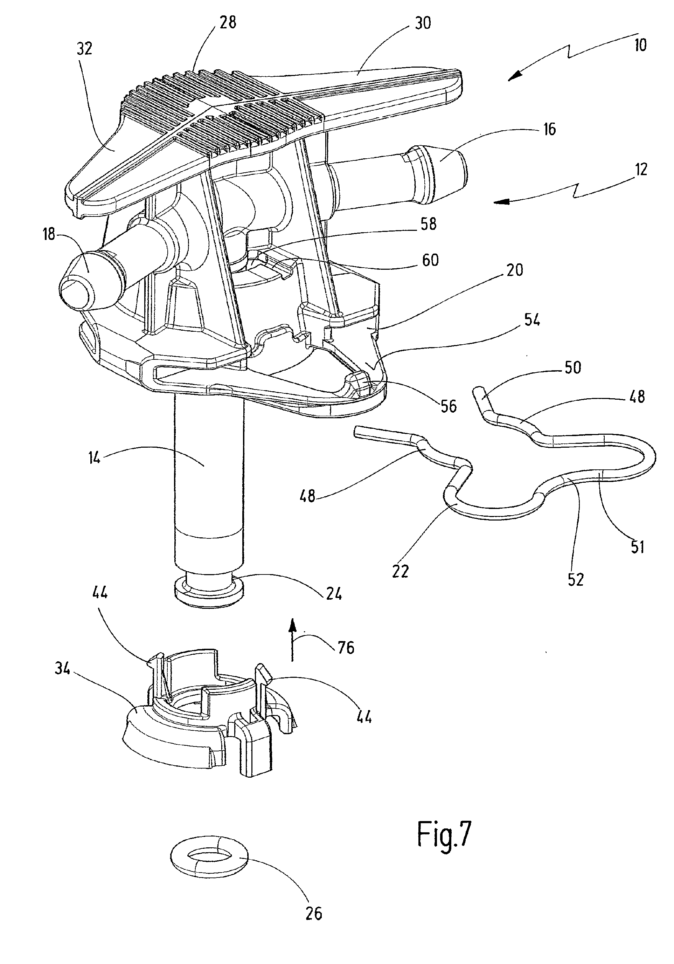

In Fig. 7 ist die Steckverbindungsanordnung 10 perspektivisch in einer Explosionsdarstellung gezeigt. Gleiche Elemente sind mit gleichen Bezugsziffern bezeichnet, wobei hier lediglich die Besonderheiten erläutert sind.

Zunächst wird das Fixierelement 22 radial in die Einschuböffnung 20 eingeschoben, bis die Fixierabschnitte 48 koaxial zu der Längsachse der Anschlussleitung 14 angeordnet sind. Daraufhin wird das Anschlusselement 34 auf die Anschlussleitung 14 in axialer Richtung in Richtung des Pfeils 76 aufgeschoben, bis die Raste 44 durch die Öffnung 58 hindurchgeführt ist und hinter den Anschlag 60 greift. In dieser Position sind die Fixierabschnitte 48 radial nach außen bewegt worden und somit in radialer Richtung vorgespannt. In dieser Position ist ein Aufstecken des Anschlussstutzens 62 einfach und mit wenig Kraftaufwand möglich, da die notwendige Vorspannung des Fixierelements 22 bereits durch das Anschlusselement 34 bewirkt worden ist. Durch die radiale Vorspannung des Fixierelements 22 und durch den Axialanschlag, der durch die Raste 44 und den Anschlag 60 gebildet ist, ist das Anschlusselement 34 in dieser Vormontageposition fixiert.

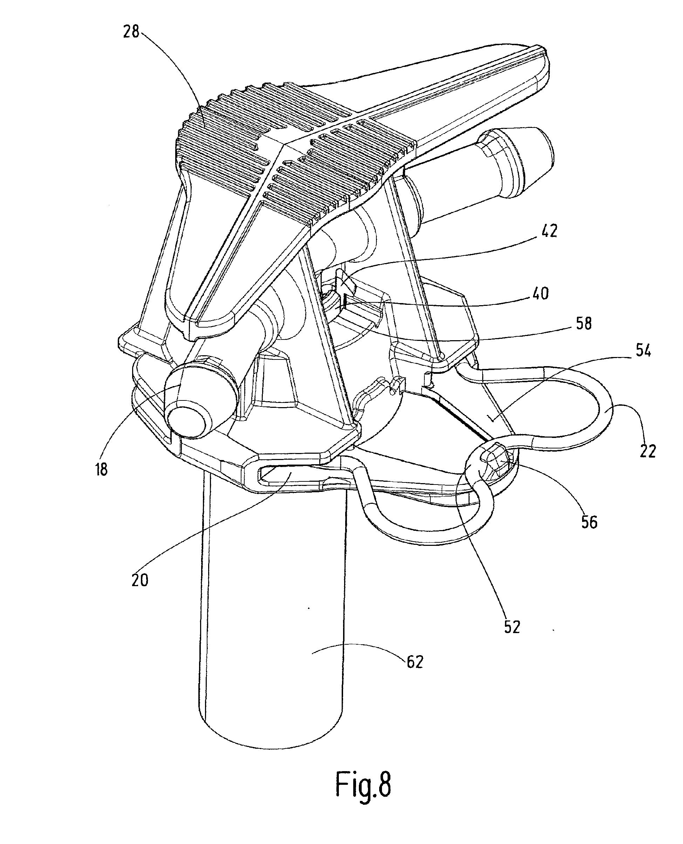

In Fig. 8 ist die Steckverbindungsanordnung 10 perspektivisch mit einem montierten Anschlussstutzen 62 gezeigt. Gleiche Elemente sind mit gleichen Bezugsziffern bezeichnet, wobei hier lediglich die Besonderheiten erläutert sind.

Durch den Fortsatz 40 und das Anschlagelement 42, die deutlich durch die Öffnung 58 hindurchragen, ist ersichtlich, dass sich das Anschlusselement 34 in der Einbauposition befindet. Der Anschlussstutzen 62 ist vollständig auf die Anschlussleitung 14 aufgeschoben, wobei sich das Fixierelement 22 bereits in einer Demontageposition befindet. In dieser Position ist der Anschlagabschnitt 52 an dem Anschlag 56 zur Anlage gebracht, so dass in dieser Demontageposition bereits der Anschlussstutzen 62 in axialer Richtung von der Anschlussleitung 14 heruntergezogen werden kann. Dadurch ist eine zerstörungsfreie und einfache Demontage des Anschlussstutzens 62 möglich.

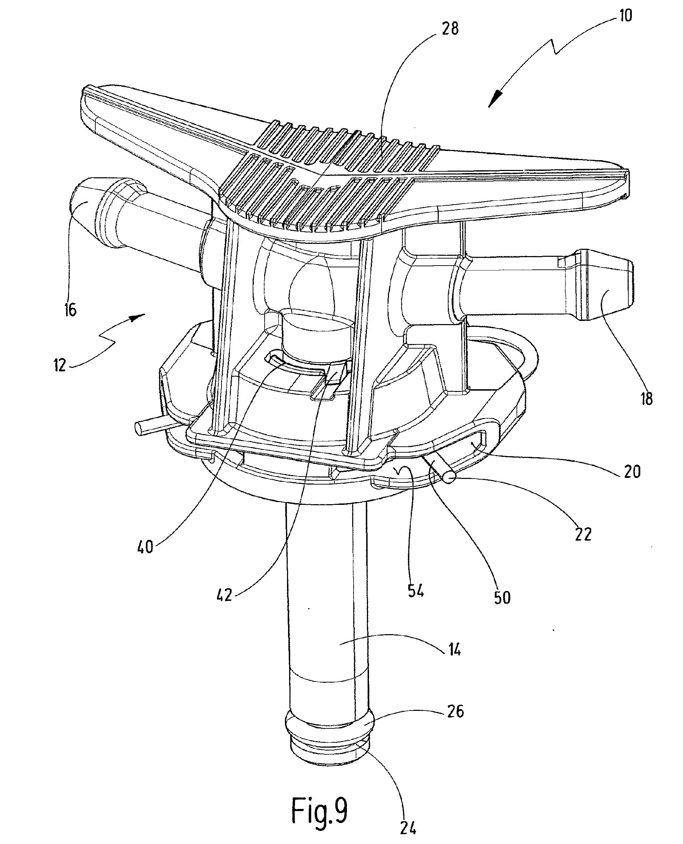

In Fig. 9 ist eine perspektivische Rückseitenansicht der Steckverbindungsanordnung 10 schematisch dargestellt. Gleiche Elemente sind mit gleichen Bezugsziffern bezeichnet, wobei hier lediglich die Besonderheiten erläutert sind.

Der Fortsatz 40 und das Anschlagelement 42 zeigen in dieser Position an, dass das Anschlusselement 34 sich in der Vormontageposition befindet. Die Einführabschnitte 50 des Fixierelements 22 sind vollständig in die radiale Einschuböffnung eingefügt, so dass sie an der gegenüberliegenden Seite wieder aus der radialen Einschuböffnung herausragen. In dieser Position ist somit das Anschlusselement 34 mittels der Fixierabschnitte 48 in der Vormontageposition fixiert, so dass die so bereitgestellte Steckverbindungsanordnung 10 zur Montage mit dem Anschlussstutzen 62 bereit ist.

Es versteht sich, dass die Steckverbindungsanordnung 10 auch lediglich einen der Anschlussstutzen 16, 18 aufweisen kann, oder aber als zwei der Anschlussstutzen 16, 18.

Vorzugsweise wird die Steckverbindungsanordnung 10 als Leckölstecker verwendet, um überschüssigen Treibstoff einer Verbrennungskraftmaschine wieder in den Treibstofftank zurückzuführen, um ihn der Verbrennungskraftmaschine wieder zuzuführen.

## Patentansprüche

1. Steckverbindungsanordnung (10) zum lösbaren Verbinden von Fluidleitungen, mit:
- einem Grundkörper (12), der eine Anschlussleitung (14) und eine Einschuböffnung (20) aufweist, wobei der Grundkörper (12) mit einer der Fluidleitungen verbindbar ist, und wobei ein Anschlussstutzen (62), der mit einer zweiten der Fluidleitungen verbindbar ist, auf die Anschlussleitung (14) aufsteckbar ist, um mit der Anschlussleitung (14) eine dichte Verbindung zu bilden,
- einem Fixierelement (22), das in der Einschuböffnung (20) aufgenommen und in der Einschuböffnung (20) in axialer Richtung der Anschlussleitung (14) fixiert ist, um den Anschlussstutzen (62) in einer Einbauposition festzulegen,
**gekennzeichnet durch**
ein Anschlusselement (34), das an der Anschlussleitung (14) in axialer Richtung beweglich gelagert ist und das Fixierelement (22) in einer Axialposition in radialer Richtung vorspannt.

2. Steckverbindungsanordnung nach Anspruch 1, **dadurch gekennzeichnet, dass** das Anschlusselement (34) mittels des Anschlussstutzens (62) in eine zweite Axialposition bewegbar ist, so dass das Fixierelement (22) an dem Anschlussstutzen (62) zur Anlage kommt und den Anschlussstutzen (62) in axialer Richtung festlegt.

3. Steckverbindungsanordnung nach Anspruch 2, **dadurch gekennzeichnet, dass** der Grundkörper (12) einen Axialanschlag (72) für das Anschlusselement (34) aufweist, und wobei das Anschlusselement (34) in der zweiten Axialposition zwischen dem Axialanschlag (72) und der Einschuböffnung (20) angeordnet ist.

4. Steckverbindungsanordnung nach einem der Ansprüche 1 bis 3 oder dem Oberbegriff von Anspruch 1, **dadurch gekennzeichnet, dass** der Grundkörper (12) einen Aufnahmeabschnitt (74) aufweist, der zwischen einem Axialanschlag (72) des Grundkörpers (12) und der Einschuböffnung (20) gebildet ist, wobei ein Anschlusselement (34) mittels des Anschlussstutzens (62) in den Aufnahmeabschnitt (74) einführbar ist, und wobei das Anschlusselement (34) in dem Aufnahmeabschnitt (74) derart zusammengedrückt wird, dass der Anschlussstutzen (62) koaxial zu der Anschlussleitung (14) fixiert wird.

5. Steckverbindungsanordnung nach Anspruch 4, **dadurch gekennzeichnet, dass** das Anschlusselement (34) einen Zentrierabschnitt (38) mit einem Außenradius aufweist, der größer ist als ein Innenradius des Aufnahmeabschnitts (74).

6. Steckverbindungsanordnung nach Anspruch 4 oder 5, **dadurch gekennzeichnet, dass** der Aufnahmeabschnitt (74) koaxial zu der Anschlussleitung (14) ausgebildet ist.

7. Steckverbindungsanordnung nach einem der Ansprüche 1 bis 6 oder dem Oberbegriff von Anspruch 1, **gekennzeichnet durch** ein Anschlusselement (34), das an der Anschlussleitung (14) in axialer Richtung beweglich gelagert ist, wobei das Anschlusselement (34) mittels des Anschlussstutzens (62) in eine Einbauposition bewegbar ist, wobei das Anschlusselement (34) einen in axialer Richtung hervorstehenden Fortsatz (40) aufweist, der in der Einbauposition in eine Öffnung (58) des Grundkörpers (12) hineinragt, um die Position des Anschlusselements (34) anzuzeigen.

8. Steckverbindungsanordnung nach Anspruch 7, **dadurch gekennzeichnet, dass** das Anschlusselement (34) in der Einbauposition zwischen einem Axialanschlag (72) des Grundkörpers (12) und der Einschuböffnung (20) angeordnet ist.

9. Steckverbindungsanordnung nach einem der Ansprüche 1 bis 8, **dadurch gekennzeichnet, dass** das Anschlusselement (34) ein Anschlagelement (42) aufweist, das mit dem Grundkörper (12) einen zweiten Axialanschlag (60) für das Anschlusselement (34) bildet und wobei zwischen dem ersten Axialanschlag (72) und dem zweiten Axialanschlag (60) ein Leerweg (80) gebildet ist.

10. Steckverbindungsanordnung nach Anspruch 9, **dadurch gekennzeichnet, dass** das Anschlusselement (34) zwischen dem ersten und dem zweiten Axialanschlag (72, 60) an der Anschlussleitung (14) in axialer Richtung beweglich gelagert ist.

11. Steckverbindungsanordnung nach Anspruch 9 oder 10, **dadurch gekennzeichnet, dass** an dem ersten Axialanschlag (72) eine Einbauposition des Anschlusselementes (34) und an dem zweiten Axialanschlag (60) eine Vormontageposition gebildet ist.

12. Steckverbindungsanordnung nach einem der Ansprüche 9 bis 11, **dadurch gekennzeichnet, dass** das Anschlagelement (42) als ein in axialer Richtung hervorstehendes Rastelement (44) ausgebildet ist, das in eine Öffnung (58) des Grundkörpers hineinragt.

13. Steckverbindungsanordnung nach einem der Ansprüche 1 bis 12, **dadurch gekennzeichnet, dass** das Anschlusselement (34) wenigstens ein Mitnehmerelement (46) aufweist, das das Anschlusselement (34) mit dem Anschlussstutzen (62) in axialer Richtung lösbar verbindet.

14. Steckverbindungsanordnung nach Anspruch 13, **dadurch gekennzeichnet, dass** das Mitnehmerelement (46) derart ausgebildet ist, dass der Anschlussstutzen (62) von dem Anschlusselement (34) durch eine vordefinierte Zugkraft lösbar ist.

15. Steckverbindungsanordnung nach Anspruch 13 oder 14, **dadurch gekennzeichnet, dass** das Mitnehmerelement (46) als Rastelement (82) ausgebildet ist.
